# EUROPÄISCHE PATENTSCHRIFT

(11) **EP 2 340 414 B1**
(45) Veröffentlichungstag und Bekanntmachung des Hinweises auf die Patenterteilung: **23.09.2015**
(21) Anmeldenummer: 09764453.8
(22) Anmeldetag: 25.11.2009
(51) Int. Cl.: G01D 5/14

(54) **HALBLEITERCHIP UND VERFAHREN ZUM ERZEUGEN VON IMPULSFLANKEN, DIE DER BEWEGUNG EINES MECHANISCHEN TEILES SYNCHRON ZUGEORDNET SIND**
SEMICONDUCTOR CHIP AND METHOD FOR GENERATING PULSE EDGES SYNCHRONOUSLY ASSOCIATED WITH THE MOVEMENT OF A MECHANICAL PART
PUCE À SEMI-CONDUCTEUR ET PROCÉDÉ PERMETTANT DE PRODUIRE DES FLANCS D'IMPULSION QUI SONT ASSOCIÉS DE MANIÈRE SYNCHRONE AU MOUVEMENT D'UNE PIÈCE MÉCANIQUE

(30) Priorität: 27.11.2008 DE 102008059401
(43) Veröffentlichungstag der Anmeldung: 06.07.2011
(73) Patentinhaber: Micronas GmbH, 79108 Freiburg (DE)
(72) Erfinder: FRANKE, Jörg, 79117 Freiburg (DE); HEBERLE, Klaus, 79312 Emmendingen (DE)
(74) Vertreter: Koch Müller Patentanwaltsgesellschaft mbH
(86) Internationale Anmeldenummer: PCT/EP2009/008384
(87) Internationale Veröffentlichungsnummer: WO 2010/060607

(56) Entgegenhaltungen:
- EP-A1- 0 419 041
- US-A- 5 637 995

## Beschreibung

Die Erfindung betrifft ein Verfahren zum Erzeugen von Impulsflanken, die der Bewegung eines mechanischen Teiles synchron zugeordnet sind, wobei ein Magnetfeld erzeugt und mindestens zwei Messsignale für das Magnetfeld erfasst werden, wobei das Magnetfeld derart in Abhängigkeit von der Bewegung des mechanischen Teiles verändert wird, dass die Messsignale zueinander phasenverschoben moduliert werden. Außerdem bezieht sich die Erfindung auf einen Halbleiterchip, in den ein Magnetfeldsensor und eine damit verbundene Signalverarbeitungseinrichtung integriert sind, wobei der Magnetfeldsensor zumindest ein erstes Sensorelement und ein zweites Sensorelement aufweist, die die zueinander versetzt und/oder mit ihren Messachsen quer zueinander angeordnet sind.

Ein derartiges Verfahren, bei dem der Geber als um eine Rotationsachse drehbar gelagertes weichmagnetisches Zahnrad ausgestaltet ist, ist aus US 5 637 995 A bekannt. Am Außenumfang des Gebers ist ein Halbleiterchip angeordnet, in den ein Magnetfeldsensor mit zwei magnetoresistiven Sensorelementen integriert ist. An der dem Zahnrad abgewandten Rückseite des Halbleiterchips ist ein Permanentmagnet angeordnet, dessen magnetischer Fluss die Sensorelemente und das Zahnrad durchsetzt. Die Sensorelemente sind etwa stabförmig ausgestaltet und in einer rechtwinklig zur Rotationsachse des Zahnrads verlaufenden Ebene mit ihren Längsachsen gegenüber der Magnetisierungsrichtung des Permanentmagneten um 45° in zueinander entgegen gesetzte Richtungen geneigt. Wenn sich die Zähne des Zahnrads an der aus den Sensorelementen und dem Permanentmagnet bestehenden Anordnung vorbeibewegen, ändert sich an den Sensorelementen die Richtung des magnetischen Flusses. Die Messsignale der Sensorelemente haben jeweils einen etwa wellenlinienförmigen Verlauf, wobei das Messsignal des einen Sensorelements jeweils ein Maximum aufweist, wenn das Messsignal des anderen Sensorelements ein Minimum hat. Die Messsignale werden einer Signalwandlerstufe zugeführt, die an einem Ausgangsanschluss jeweils eine Impulsflanke erzeugt, wenn die Messsignale ihr Maximum bzw. Minimum durchlaufen. Die Impulsflanken sollen immer dann auftreten, wenn eine Zahnflanke des Zahnrads am Magnetfeldsensor vorbeibewegt wird. Das Verfahren hat den Nachteil, dass die Detektion des Maximums bzw. des Minimums mit Ungenauigkeiten behaftet ist. Dadurch kann zwischen dem Auftreten einer Impulsflanke und dem Zeitpunkt, an dem eine Zahnflanke an dem Magnetfeldsensor vorbeiläuft, eine Zeitverschiebung auftreten.

Des Weiteren sind aus der DE 36 39 208 A1, der DE 10 2004 017 191 A1, der DE 199 06 937 A1, der DE 10 2006 055 305 A1 und der DE 101 22 277 A1 sowohl Magnetfeldsensoren und Schaltungsanordnungen mit Magnetfeldsensoren bekannt.

Es besteht die Aufgabe den Stand der Technik weiterzubilden. Die Aufgabe wird durch die Merkmale des Anspruchs 1 und des Anspruchs 2 und des Anspruchs 7 gelöst.

Diese Aufgabe wird bezüglich des Verfahrens dadurch gelöst,
a) dass ein erstes Messsignal mit mindestens einem ersten Referenzwert verglichen wird, und
b) dass ein zweites Messsignal mit mindestens einem zweiten Referenzwert verglichen und/oder
c) der Betrag des ersten Messsignals mit dem Betrag des zweiten Messsignal verglichen wird,
und dass eine Impulsflanke erzeugt wird, wenn mindestens einer dieser Vergleiche eine Übereinstimmung ergibt oder das Ergebnis des betreffenden Vergleichs sein Vorzeichen ändert. Unter einem Vergleich von zwei Signalen wird ein größer/kleiner-Vergleich, ein Vergleich auf Übereinstimmung und/oder die Bildung der Differenz der Signale verstanden.

In vorteilhafter Weise können die Referenzwerte bei den Verfahrensschritten a) und b) jeweils in einem Abschnitt des Messsignals gelegt werden, in dem dieses eine große Steigung aufweist. So kann beispielsweise bei einem sinus- oder cosinusförmigen Messsignal der Referenzwert im Bereich des Nulldurchgangs des Messsignals liegen. Da die Messsignale eine Phasenverschiebung zueinander aufweisen, können Impulsflanken, die mit Hilfe eines ersten Messsignals erzeugt werden, zwischen Impulsflanken liegen, die mit Hilfe eines zweiten Messsignals erzeugt werden. Somit kann auf einfache Weise eine Vielzahl von zur Bewegung des mechanischen Teiles synchronen Impulsflanken mit großer Präzision generiert werden.

Anstelle des Verfahrensschritts b) oder zusätzlich zu diesem kann auch Verfahrensschritt c) zur Anwendung kommen, Dabei werden Impulsflanken erzeugt, wenn die Messsignale betragsmäßig übereinstimmen oder wenn bei der Differenz aus dem Betrag eines ersten Messsignals und dem Betrag eines zweiten Messsignals eine Änderung des Vorzeichens der Differenz auftritt. Auch auf diese Weise können mit großer Präzision eine Vielzahl von zur Bewegung des mechanischen Teiles synchronen Impulsflanken generiert werden. Die Überprüfung der betragsmäßigen Übereinstimmung der Messsignale kann in der Weise erfolgen, dass eines der miteinander zu vergleichenden Messsignale in invertierter Form und zusätzlich in nichtinvertierter Form jeweils mit dem anderen Messsignal verglichen wird und die Impulsflanke erzeugt wird, wenn bei mindestens einem dieser Vergleiche eine Übereinstimmung ergibt oder wenn bei mindestens einem dieser Vergleiche eine Änderung des Vorzeichens der Differenz der Messsignale auftritt. Der erste Referenzwert und der zweite Referenzwert können identisch oder unterschiedlich sein.

Bei einer vorteilhaften Ausgestaltung der Erfindung wird ein zum ersten Messsignal und zum zweiten Messsignal phasenverschobenes drittes Messsignal erfasst,
wobei das dritte Messsignal mit einem dritten Referenzwert verglichen wird, und/oder wobei der Betrag des ersten Messsignals mit dem Betrag des dritten Messsignals verglichen wird, und/oder
wobei der Betrag des zweiten Messsignals mit dem Betrag des dritten Messsignals verglichen wird,
und wobei eine Impulsflanke erzeugt wird, wenn mindestens einer dieser Vergleiche eine Übereinstimmung ergibt oder das Ergebnis des betreffenden Vergleichs sein Vorzeichen ändert. Dadurch kann eine noch größere Anzahl von zur Bewegung des mechanischen Teiles synchronen Impulsflanken erzeugt werden. In entsprechender Weise können auch mehr als drei zueinander phasenverschobene Messsignale des Magnetfelds ausgewertet werden.

Die Messsignale entsprechen vorzugsweise quer und insbesondere rechtwinklig zueinander angeordneten Komponenten des Magnetfelds. Die Messsignale können dazu beispielsweise mit. Hilfe von Hallsensoren, deren Messachsen rechtwinklig zueinander angeordnet sind, gemessen werden.

Bei einer vorteilhaften Ausführungsform der Erfindung wird das mechanische Teil in eine Anzahl vorbestimmter Referenzpositionen gebracht, an denen jeweils ein Messsignal mit einem Referenzwert verglichen werden soll, wobei an einer ersten Referenzposition ein Messwert für das erste Messsignal aufgezeichnet und als erster Referenzwert gespeichert wird, wobei an einer zweiten Referenzposition ein Messwert für das zweite Messsignal aufgezeichnet und als zweiter Referenzwert gespeichert wird, und wobei danach das mechanische Teil bewegt und die in Anspruch 1 genannten Schritte a) und b) mindestens einmal durchgeführt werden. Durch diese Kalibrierung der Referenzwerte kann der Einfluss von in dem Messsignal enthaltenen Oberwellen auf die Impulsflankenerzeugung abgeschwächt oder unterdrückt werden.

Bei einer anderen vorteilhaften Ausgestaltung des Verfahrens wird das mechanische Teil an einer Anzahl vorbestimmter Referenzstellen positioniert, an denen jeweils das erste Messsignal mit dem zweiten Messsignal verglichen werden soll, wobei an jeder Referenzstelle jeweils ein Messwert für das erste Messsignal und für das zweite Messsignal erfasst wird, wobei die Differenz aus diesen Messwerten gebildet und als Korrekturwert abgelegt wird, wobei danach das mechanische Teil bewegt wird, wobei ein korrigiertes erstes Messsignal gebildet wird, indem der Korrekturwert zu dem ersten Messsignal addiert oder von diesem subtrahiert wird, und wobei der Betrag des korrigierten ersten Messsignals mit dem Betrag des zweiten Messsignals verglichen wird und eine Impulsflanke erzeugt wird, wenn der Vergleich eine Übereinstimmung ergibt oder das Ergebnis des Vergleichs sein Vorzeichen ändert. Auch durch diese Kalibrierung kann der Einfluss von in dem Messsignal enthaltener Oberwellen auf die Impulsflankenerzeugung abgeschwächt oder unterdrückt werden.

Ferner besteht die Möglichkeit, dass die Messsignale tiefpassgefiltert werden, bevor sie einem Referenzwert oder einem anderen Messsignal-verglichen werden. Die Tiefpassfilterung kommt bevorzugt zur Anwendung, wenn die Bewegungsgeschwindigkeit des mechanischen Teiles einen vorbestimmten Grenzwert überschreitet.

Die vorstehend genannte Aufgabe wird bezüglich des Halbleiterchips der eingangs genannten Art dadurch gelöst, dass die Signalverarbeitungseinrichtung eine Vergleichseinrichtung aufweist, die derart ausgestaltet ist dass ein erstes Messsignal des ersten Sensorelements mit einem ersten Referenzwert und
dass ein zweites Messsignal des zweiten Sensorelements mit einem zweiten Referenzwert und/oder
der Betrag des ersten Messsignals mit dem Betrag des zweiten Messsignals vergleichbar ist,
und dass die Vergleichseinrichtung derart mit einem Impulsflankengenerator in Steuerverbindung steht, dass eine Impulsflanke erzeugt wird, wenn mindestens einer dieser Vergleiche eine Übereinstimmung ergibt oder das Ergebnis des betreffenden Vergleichs sein Vorzeichen ändert.

Die Vergleichseinrichtung kann Speicherplätze für mindestens einen Referenzwert und zum Zwischenspeichern der Vergleichsergebnisse aufweisen. Beim Einschalten oder Hochfahren des Halbleiterchips können die Speicherplätze für die Vergleichsergebnisse mit Startwerten vorbesetzt werden.

Weitere vorteilhafte Ausgestaltungen der Erfindung sind in den Unteransprüchen aufgeführt.

Nachfolgend sind Ausführungsbeispiele der Erfindung anhand der Zeichnung näher erläutert. Es zeigt:
- Fig. 1: eine Teilaufsicht auf eine Messvorrichtung zur Erfassung einer Relativbewegung zwischen einem Zähne aufweisenden Geberrad und mindestens einem in einen Halbleiterchip integrierten Magnetfeldsensor,
- Fig. 2: eine Teilaufsicht auf eine Messvorrichtung zur Erfassung einer Relativbewegung zwischen einem Magnetpole aufweisenden Geber und mindestens einem in einen Halbleiterchip integrierten Magnetfeldsensor,
- Fig. 3: eine graphische Darstellung von zwei Messsignalen für rechtwinklig zueinander angeordnete Komponenten des magnetischen Flusses im Magnetfeldsensor, wobei ein sinusförmiges erstes Messsignal als durchgezogene Linie und ein cosinusförmiges zweites Messsignal als strichlinierte Linie dargestellt sind und wobei zusätzlich die invertierten Messsignale als punktierte bzw. strickpunktierte Linie dargestellt sind, wobei auf der Abszisse die Position eines Gebers und auf der Ordinate die Amplitude des Messsignals aufgetragen ist,
- Fig. 4: eine graphische Darstellung eines digitalen Ausgangssignals des Halbleiterchips, wobei auf der Abszisse die Position des Gebers und auf der Ordinate die Amplitude des Ausgangssignals aufgetragen ist,
- Fig. 5: eine Darstellung ähnlich Fig. 3, wobei jedoch die Messsignale Oberwellen aufweisen,
- Fig. 6A bis 6M: Querschnitte durch unterschiedliche Ausführungsbeispiele des Halbleiterchips, wobei die Querschnittsebene der Zeichenebene in Fig. 1 bzw. in Fig. 2 entspricht, und
- Fig. 7A bis 7D: Aufsichten auf die dem Geber zugewandte Seite von weiteren Ausführungsbeispielen des Halbleiterchips.

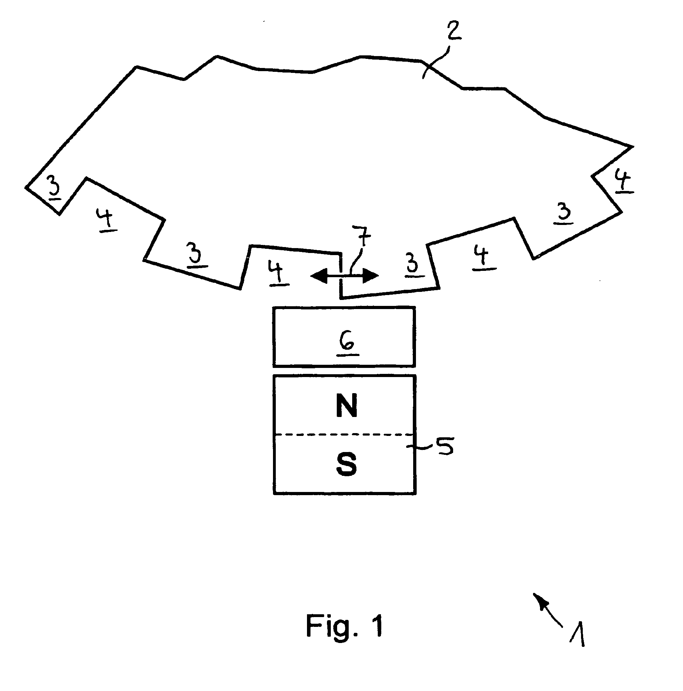

Eine in Fig. 1 im Ganzen mit 1 bezeichnete Messvorrichtung zur Erfassung eine Relativbewegung weist einen als Zahnrad ausgestalteten weichmagnetischen Geber 2 auf, der an einer in der Zeichnung nicht näher dargestellten Halterung um ein Rotationsachse drehbar gelagert ist. Der Geber 2 hat an seinem Außenumfang mehrere in Umfangsrichtung voneinander beabstandete Zähne 3, zwischen denen Zahnlücken 4 gebildet sind.

Am Außenumfang des Gebers 2 ist ferner ein Permanent-Magnet 5 angeordnet, der durch einen Luftspalt in radialer Richtung vom Geber 2 beabstandet ist. Der Magnet 5 ist etwa radial zur Rotationsachse des Gebers 2 magnetisiert.

Im Luftspalt ist ein Halbleiterchip 6 angeordnet, der mit seiner Chipebene parallel zur Rotationsachse des Gebers 2 und parallel zur Bewegungsrichtung 7 der an dem Halbleiterchip 6 vorbeilbewegbaren Zähne 3 und Zahnlücken 4 orientiert ist. In den Halbleiterchip sind ein Magnetfeldsensor und eine in der Zeichnung nicht näher dargestellte Signalverarbeitungseinrichtung integriert. Der Geber 2 und der Magnetfeldsensor werden von dem vom Magnet 5 erzeugten magnetischen Fluss durchströmt.

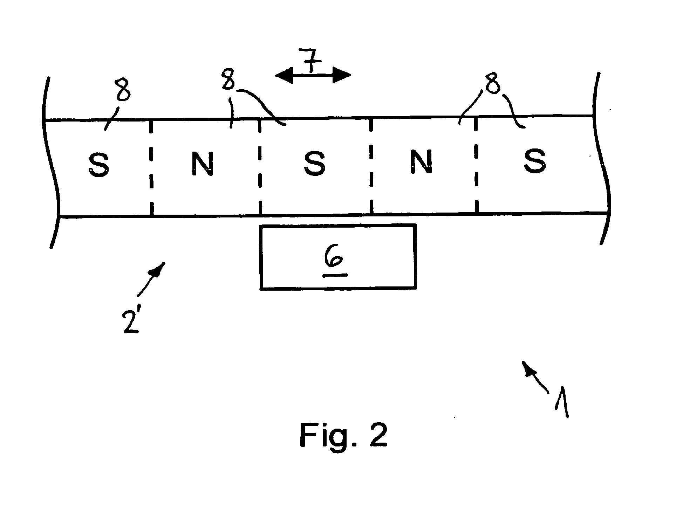

Bei dem in Fig. 2 dargestellten Ausführungsbeispiel weist die Messvorrichtung 1 einen in Bewegungsrichtung 7 der Relativbewegung verschiebbaren, stabförmigen Geber 2' auf. Der Geber 2' hat eine sich in Bewegungsrichtung 7 erstreckende Reihe von abwechselnd in zueinander entgegengesetzte Richtungen magnetisierten Magnetpolen 8. In dem vom Geber 2' erzeugten magnetischen Fluss ist ein einen Magnetfeldsensor aufweisender Halbleiterchip 6 angeordnet, der mit einer Flachseite den Magnetpolen 8 zugewandt ist und mit seiner Chipebene parallel zur Bewegungsrichtung 7 verläuft.

Mit Hilfe des Magnetfeldsensors werden zwei zueinander phasenverschobene Messsignale 9, 10 für den magnetischen Fluss erfasst. Ein erstes Messsignal 9 entspricht vorzugsweise einer erste Komponente des Magnetfelds und ein zweites Messsignal 10 einer rechtwinklig zur ersten Komponente angeordneten zweiten Komponente des Magnetfelds. Die beiden Komponenten sind in einer zu der Zeichenebene in Fig. 1 und 2 parallelen Ebene angeordnet.

Wenn die Zähne 3 bzw. die Magnetpole 8 am Magnetfeldsensor vorbeibewegt werden, ändert sich die Richtung, in welcher der magnetische Fluss den Magnetfeldsensor durchsetzt. Außerdem verändert sich der Betrag des durch den Magnetfeldsensor fließenden magnetische Flusses. Dadurch wird das erste Messsignal 9 etwa sinusförmig und das zweite Messsignal 10 etwa cosinusförmig moduliert.

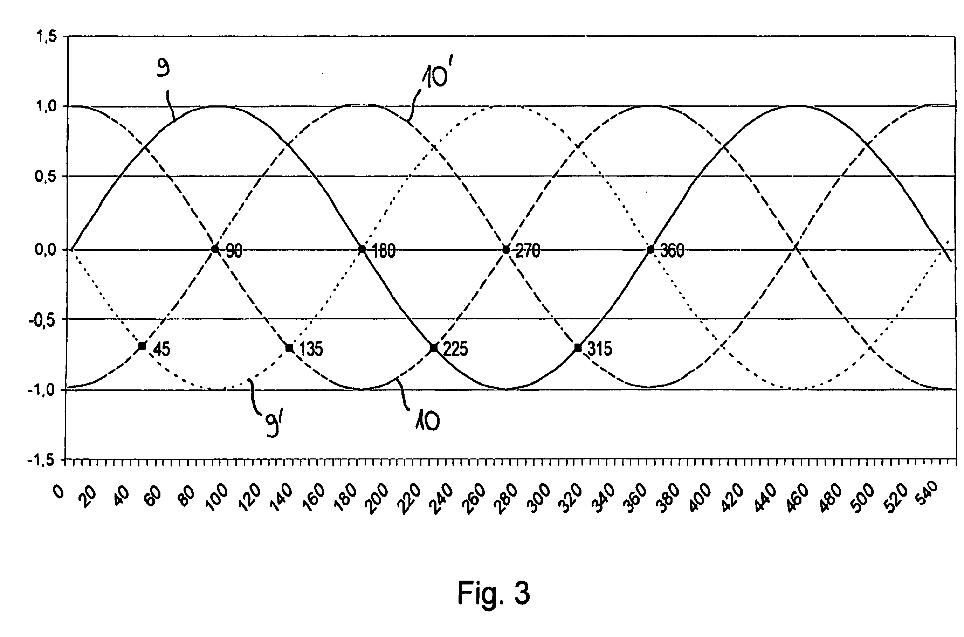

Bei dem Ausführungsbeispiel gemäß Fig. 3 werden das erste Messsignal 9 und das zweite Messsignal 10 jeweils mit dem Referenzwert null verglichen. Der Referenzwert ist so gewählt, dass die Messsignale 9, 10 ihre größte Steigung aufweisen, wenn sie mit dem Referenzwert übereinstimmen.

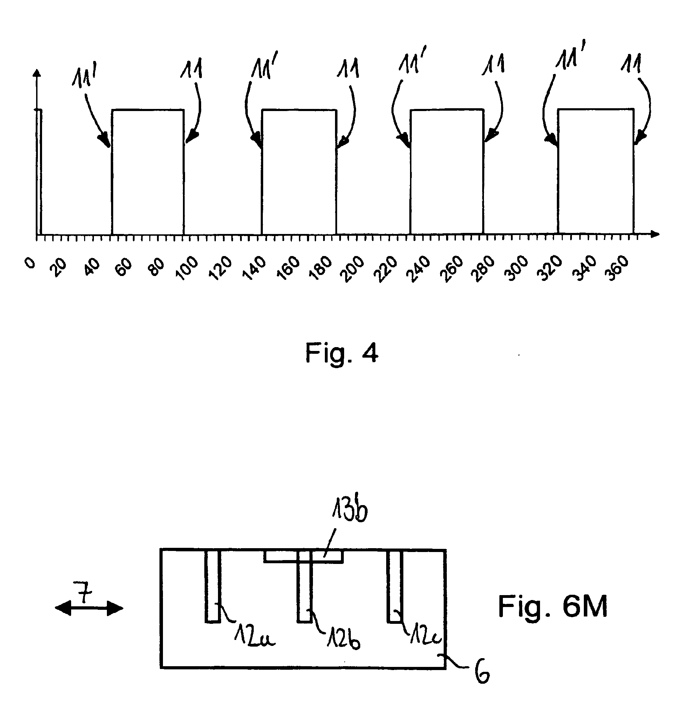

An den Stellen, an denen die Vergleiche eine Übereinstimmung ergeben, wird jeweils an einen Ausgangsanschluss des Halbleiterchips 6 eine Impulsflanke 11 ausgegeben (Fig. 4). Die entsprechenden Stellen, an denen diese Impulsflanken 11 erzeugt werden, sind in Fig. 3 durch die mit "0", "90", "180", "270" und "360" bezeichneten Punkte markiert.

Außerdem werden die Beträge der Messsignale 9 und 10 miteinander verglichen und bei einer Übereinstimmung der Beträge werden zusätzliche Impulsflanken 11' erzeugt. Die entsprechenden Stellen, an denen zusätzlichen Impulsflanken 11' erzeugt werden, sind in Fig. 3 durch die mit "45", "135", "225" und "315" bezeichneten Punkte markiert. Wie in Fig. 3 erkennbar ist, wird zum Vergleichen der Beträge der Messsignale 9, 10 für jedes Messsignal 9, 10 jeweils ein invertiertes Messsignal 9', 10' erzeugt.

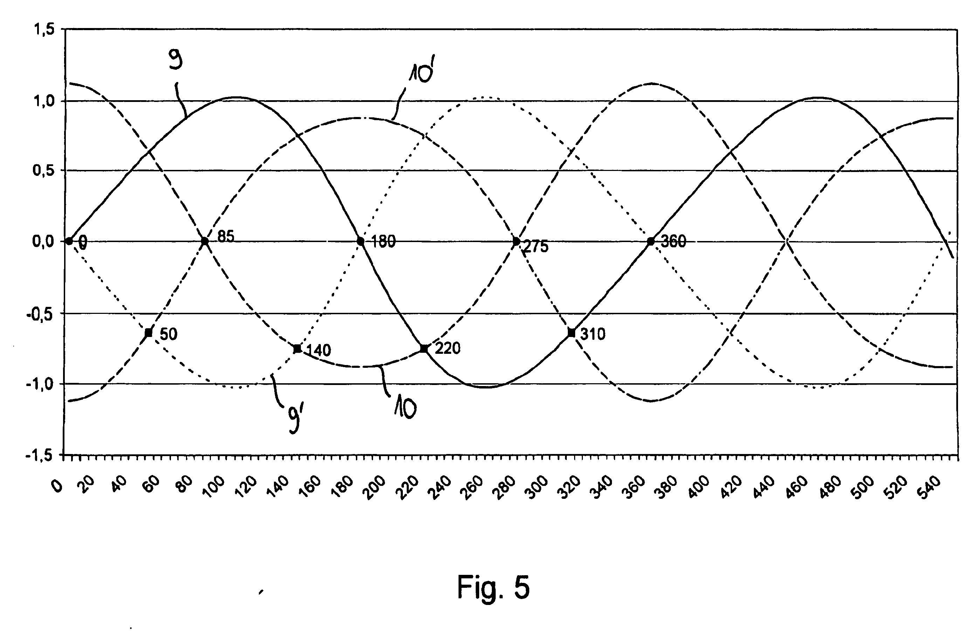

Bei dem in Fig. 5 gezeigten Ausführungsbeispiel weisen die Messsignale 9 Oberwellen auf. Deutlich ist erkennbar, dass die Schnittpunkte zwischen den Messsignalen 9, 10 bzw. den invertierten Messsignalen 9', 10' in Fig. 5 von den entsprechenden Schnittpunkten der Messsignale 9, 10, 9', 10' in Fig. 3 abweichen.

Um den Einfluss der Oberwellen auf die Impulsflanken 11, 11' zu unterdrücken, wird In einem ersten Verfahrensschritt der Geber 2 an ersten Referenzpositionen (0°, 180°) positioniert, an denen später die Impulsflanken 11, 11' erzeugt werden. Für jede erste Referenzposition, bei der die Grundwelle des ersten Messsignals 9 einen Nulldurchgang aufweist, wird jeweils ein Messwert für das erste Messsignal 9 erfasst und als ein der der betreffenden ersten Referenzposition zugeordneter Referenzwert zwischengespeichert.

In entsprechender Weise wird für zweite Referenzpositionen (90°, 270°), bei denen die Grundwelle des zweiten Messsignals 10 einen Nulldurchgang aufweist, jeweils ein Messwert für das zweite Messsignal 10 erfasst und als ein der betreffenden zweiten Referenzposition zugeordneter Referenzwert zwischengespeichert.

Außerdem wird der Geber 2, 2' an dritten Referenzpositionen (45°, 135°, 225°, 315°) positioniert, an denen der Betrag der Grundwelle des ersten Messsignals 9 mit dem Betrag der Grundwelle des zweiten Messsignals 10 übereinstimmt.

An jeder dritten Referenzstelle wird jeweils ein Messwert für das erste Messsignal und für das zweite Messsignal erfasst. Dann wird die Differenz aus diesen Messwerten gebildet und als der betreffenden dritten Referenzposition zugeordneter Korrekturwert abgelegt.

Nachdem auf diese Weise für alle Referenzpositionen jeweils ein Referenzwert bzw. ein Korrekturwert ermittelt wurde, wird der Geber 2, 2' - ausgehend von einer Startposition - relativ zum Magnetfeldsensor bewegt und es werden die Messsignale 9, 10 erfasst Das erste Messsignal wird nacheinander mit den ersten Referenzwerten und das zweite Messsignal nacheinander mit den zweiten Referenzwerten verglichen. Wenn bei einem dieser Vergleiche eine Übereinstimmung auftritt oder das Ergebnis des betreffenden Vergleichs sein Vorzeichen ändert, wird eine Impulsflanke 11 erzeugt und die Referenzwerte werden entsprechend nachgeführt.

Für die an den dritten Referenzpositionen zu erzeugenden Impulsflanken 11' wird ein korrigiertes erstes Messsignal gebildet, indem der für die betreffende Referenzposition gespeicherte Korrekturwert vom ersten Messsignal subtrahiert wird. Der Betrag des so erhaltenen korrigierten ersten Messsignals wird mit dem Betrag des zweiten Messsignals verglichen. Wenn der Vergleich eine Übereinstimmung ergibt oder das Ergebnis des Vergleichs sein Vorzeichen ändert, wird eine Impulsflanke 11' erzeugt und die Referenzwerte werden entsprechend nachgeführt.

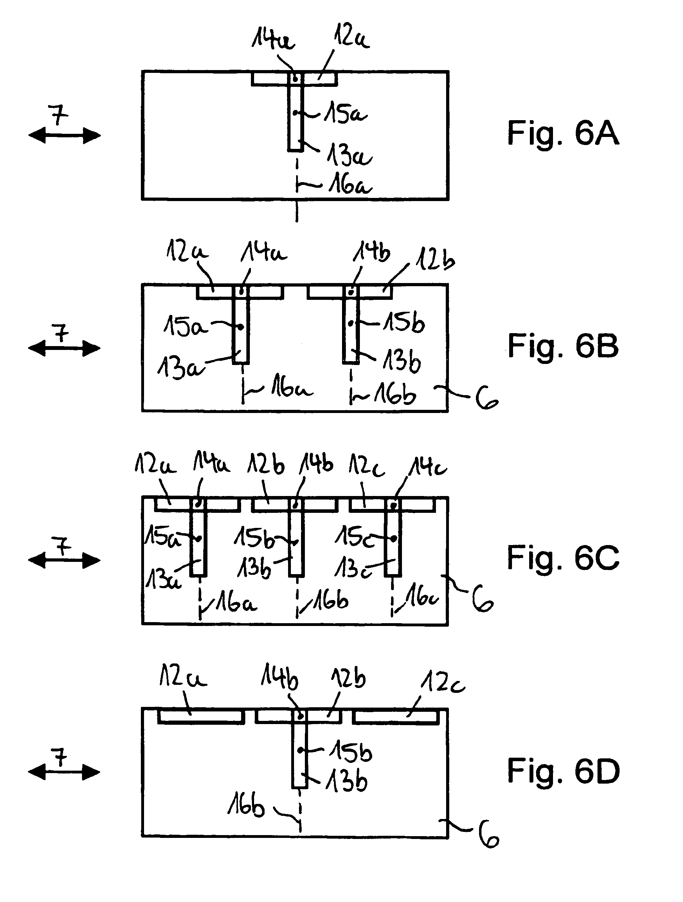

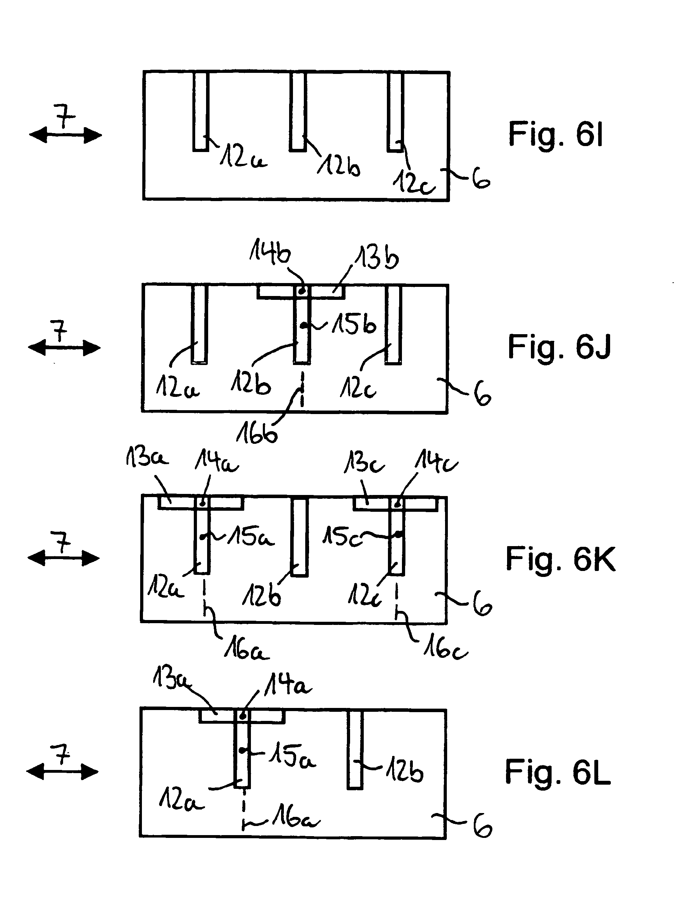

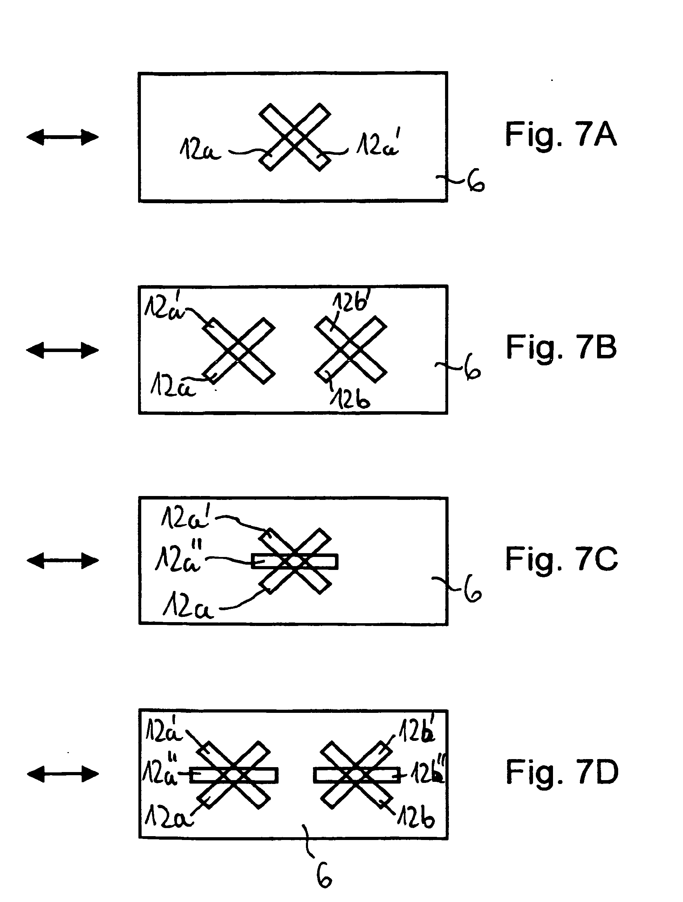

In Fig. 6A-6L und 7A-7D ist erkennbar, dass der Magnetfeldsensor als Sensorelemente Hallsensoren 12a, 12a', 12a", 12b, 12b', 12b", 12c, 13a, 13b, 13c aufweist Eine Hall-Platte mindestens eines vertikalen Hallsensors 12a, 12b, 12c ist in einer radial zur Rotationsachse des Gebers 2 verlaufenden Ebene angeordnet. Die Ebene, in der sich die Hall-Platte erstreckt, verläuft rechtwinklig zur Chipebene und rechtwinklig zur Bewegungsrichtung 7 der Relativbewegung, in der die Zähne 3 bzw. die Zahnlücken 4 an dem Magnetfeldsensor vorbei bewegbar sind. Das Messsignal des Hallsensors 16a, 16b, 16c ist somit von der in Bewegungsrichtung 7 der Relativbewegung verlaufenden Komponente des magnetischen Flusses abhängig. Diese verändert sich, wenn die Zähne 3 bzw. die Zahnlücken 4 an dem Magnetfeldsensor vorbeilaufen.

Bei dem in Fig. 6A gezeigten Ausführungsbeispiel weist der Magnetfeldsensor zusätzlich zu dem vertikalen Hallsensor 16a einen horizontalen Hallsensor 13a auf, der an der gleichen Stelle angeordnet ist, wie der vertikale Hallsensor 16a. Deutlich ist erkennbar, dass der Flächenschwerpunkt 14a der Haltplatte des vertikalen Hallsensors 16a und der Flächenschwerpunkt 15a der Hallplatte des horizontalen Hallsensors 13a in derselben, rechtwinklig zur Bewegungsrichtung 7 der Relativbewegung verlaufenden Ebene 16a angeordnet sind. Die Hall-Platten der Hallsensoren 12a, 13a durchdringen sich bereichsweise. Es sind aber auch andere Ausgestaltungen denkbar, bei denen der vertikale Hallsensor 12a und der horizontale Hallsensor 13a in Richtung der Rotationsachse des Gebers 2 bzw. rechtwinklig zur Zeichenebene voneinander beabstandet sind.

Mit Hilfe des in Fig. 6A gezeigten Magnetfeldsensors können also an derselben Stelle die tangentiale und die radiale Komponente des den Halbleiterchip 6 durchsetzenden magnetischen Flusses gemessen werden.

In Fig. 6B ist erkennbar, dass in den Halbleiterchip 2 auch zwei der jeweils aus einem vertikalen Hallsensor 12a, 12b und einem horizontalen Hallsensor 13a, 13b bestehenden Sensoranordnungen integriert sein können. Die Hallplatten der vertikalen Hallsensoren 12a, 12b sind parallel zueinander und die Hallplatten der horizontalen Hallsensoren 13a, 13b in einer Ebene nebeneinander angeordnet. Die beiden Sensoranordnungen sind in Bewegungsrichtung 7 der Relativbewegung zueinander versetzt.

Die beiden vertikalen Hallsensoren 12a, 12b sind jeweils mit ihren Messsignalanschlüssen derart in Reihe geschaltet und die Hallplatten dieser Hallsensoren 12a, 12b werden derart bestromt, dass an der Reihenschaltung der Hallsensoren 12a, 12b die Differenz zwischen den an den einzelnen vertikalen Hallsensoren 12a, 12b anliegenden Hallspannungen abgreifbar ist. In entsprechender Weise sind die beiden horizontalen Hallsensoren 13a, 13b zu einem Differential-Hallsensor verschaltet.

Bei dem in Fig. 6C gezeigten Ausführungsbeispiel sind drei Sensoranordnungen in den Halbleiterchip 2 integriert, die jeweils aus einem vertikalen Hallsensor 12a, 12b, 12c und einem horizontalen Hallsensor 13a, 13b, 13c bestehen. Die durch die Hallsensoren 12b und 13b gebildete Sensoranordnung ist mittig zwischen den aus den Hallsensoren 12a und 13a bzw. 12c und 13c bestehenden Sensoranordnungen angeordnet. Die Hallplatten der vertikalen Hallsensoren 12a, 12b, 12e sind parallel zueinander und die Hallplatten der horizontalen Hallsensoren 13a, 13b, 13c sind in einer Ebene nebeneinander angeordnet, die parallel zur Bewegungsrichtung 7 und parallel zur Rotationsachse des Gebers 2 verläuft. Die drei Sensoranordnungen sind in Bewegungsrichtung 7 in gleichen Abständen zueinander hintereinander angeordnet.

Die beiden äußeren vertikalen Hallsensoren 12a, 12c und die beiden äußeren horizontalen Hallsensoren 13a, 13c sind jeweils als Differential-Hallsensor geschaltet. Die Hallsensoren 12a, 12b, 12c, 13a, 13b, 13c sind mit einer in den Halbleiterchip integrierten Auswerteeinrichtung verbunden, die einen Ausgangsanschluss aufweist, an dem ein die Bewegungsrichtung 7 der Relativbewegung anzeigendes Ausgangssignal ausgebbar ist.

Bei dem Ausführungsbeispiel gemäß Fig. 6D sind vier Hallsensoren in den Halbleiterchip 6 integriert. Drei horizontale Hallsensoren 13a, 13b, 13c sind in der Chipebene in konstanten Abständen zueinander in einer in Bewegungsrichtung 7 verlaufenden Reihe angeordnet. Die beiden äußeren horizontalen Hallsensoren 13a, 13c bilden einen Differential-Hallsensor. Mittig zwischen diesen Hallsensoren 13a, 13c sind ein weiterer horizontaler Hallsensor 13c und ein vertikaler Hallsensor 13c angeordnet. Die Hall-Platte des vertikalen Hallsensor 13b verläuft etwa rechtwinklig zur Bewegungsrichtung 7.

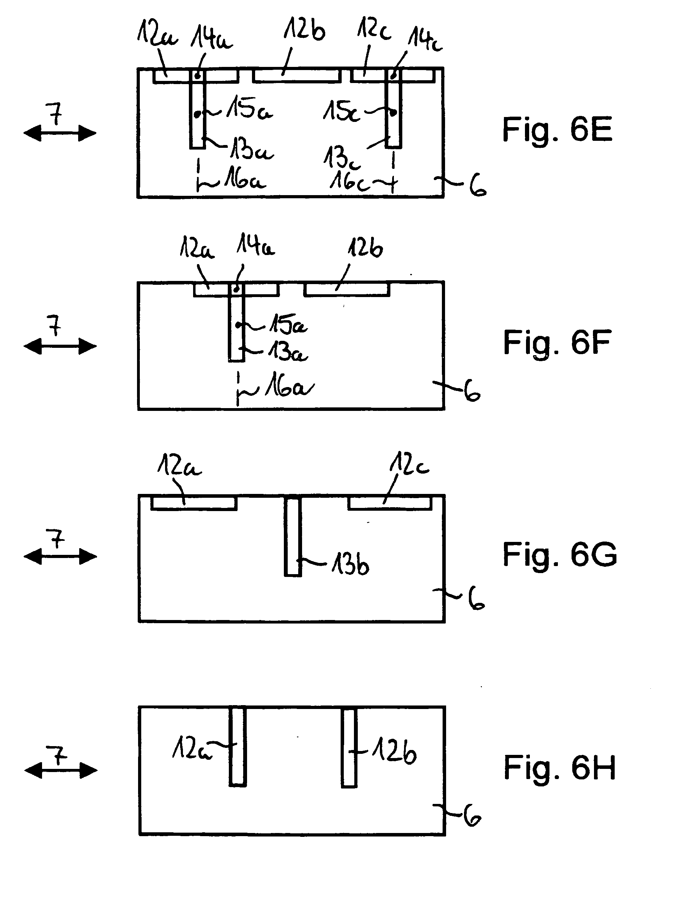

Bei dem in Fig. 6E gezeigten Ausführungsbeispiel ist zwischen zwei jeweils aus einem vertikalen Hallsensor 12a, 12c und einem horizontalen Hallsensor 13a und 13c bestehenden Sensoranordnungen ein weiterer horizontaler Hallsensor 13b angeordnet. Die Hallplatten der horizontalen Hallsensoren 13a, 13b, 13c sind jeweils parallel zur Bewegungsrichtung 7 ausgerichtet. Die Hall-Platten der drei horizontalen Hallsensoren 13a, 13b, 13c sind in der Chipebene in konstanten Abständen zueinander angeordnet. Die Hall-Platte des Hallsensors 13b befindet sich mittig zwischen den Hall-Platten der horizontalen Hallsensoren 13a, 13c unter dem horizontalen Hallsensor 13b.

Bei dem in Fig. 6F gezeigten Ausführungsbeispiel ist zusätzlich zu der in Fig. 6A dargestellten Sensoranordnung ein weiterer horizontaler Hallsensor 13b vorgesehen, dessen Hall-Platte in der Ebene der Hall-Platte des Hallsensors 13a angeordnet und seitlich von diesem in Bewegungsrichtung 7 beabstandet ist.

Bei dem in Fig. 6G gezeigten Ausführungsbeispiel ist mittig zwischen zwei in der Chipebene nebeneinander angeordneten horizontalen Hallsensoren 13a, 13c ein vertikaler Hallsensor 12a vorgesehen. Die beiden zuerst genannten Hallsensoren 13a, 13c können zu einem Differential-Hallsensors geschaltet sein oder die Messsignale dieser Hallsensoren 13a, 13c können aufsummiert werden. Die Hall-Platte des vertikalen Hallsensors 12b ist etwa rechtwinklig zur Chipebene und zur Bewegungsrichtung 7 ausgerichtet.

Wie in Fig. 6H erkennbar ist, können in den Halbleiterchip 6 auch zwei parallel zueinander angeordnete vertikale Hallsensoren 12a, 12b integriert sein. Die Hallplatten dieser Hallsensoren 12a, 12b sind wiederum rechtwinklig zur Bewegungsrichtung 7 ausgerichtet.

Bei Bedarf kann in den Halbleiterchip 6 mindestens ein weiterer vertikaler Hallsensor 12c integriert sein, der vorzugsweise parallel zu den beiden zuerst genannten Hallsensoren 12a, 12b angeordnet ist (Fig. 6I). Die Hallsensoren 12a, 12b, 12c sind in diesem Fall bevorzugt in einer geraden Reihe nebeneinander und in konstanten Abständen zueinander angeordnet.

Das in Fig. 6K gezeigte Ausführungsbeispiel entspricht dem in Fig. 6B, wobei jedoch zusätzlich zwischen den beiden, jeweils aus einem vertikalen Hallsensor 12a, 12c und einem horizontalen Hallsensor 13a, 13c gebildeten Sensoranordnungen ein weiterer vertikaler Hallsensor 12b angeordnet ist Die Hall-Platten der drei vertikalen Hallsensoren 12a, 12b, 12c verlaufen parallel zueinander und rechtwinklig zur Bewegungsrichtung 7. Die beiden äußeren vertikalen Hallsensoren 12a, 12c und die beiden äußeren horizontalen Hallsensoren 13a, 13e können als Differential-Hallsensor geschaltet sein oder ihre Messsignale werden aufaddiert. Der vertikale Hallsensor 12b ist mittig zwischen den beiden anderen vertikalen Hallsensoren 12a, 12c angeordnet.

Der Flächenschwerpunkt 14a der Hallplatte des vertikalen Hallsensors 12a und der Flächenschwerpunkt 15a der Hallplatte des horizontalen Hallsensors 13a in sind in einer ersten, rechtwinklig zur Bewegungsrichtung 7 der Relativbewegung verlaufenden Ebene 12a angeordnet. Der Flächenschwerpunkt 14b der Hallplatte des vertikalen Hallsensors 12b und der Flächenschwerpunkt 15b der Hallplatte des horizontalen Hallsensors 13b sind in einer zweiten Ebene 16b angeordnet, die parallel zur ersten Ebene 160 verläuft. Der Flächenschwerpunkt 14c der Hallplatte des vertikalen Hallsensors 12c und der Flächenschwerpunkt 15c der Hallplatte des horizontalen Hallsensors 13c sind in einer dritten Ebene 16c angeordnet, die parallel zur ersten Ebene 16a verläuft.

In Fig. 6L ist erkennbar, dass einer der beiden bei dem in Fig. 6K gezeigten Ausführungsbeispiel vorhandenen, aus einem vertikalen Hallsensor 12b und einem horizontalen Hallsensor 13b gebildeten Sensoranordnungen entfallen kann.

Wie in Fig. 6M erkennbar ist, kann mittig zwischen zwei in der Chipebene nebeneinander angeordneten vertikalen Hallsensoren 12a, 12c ein horizontaler Hallsensor 13b vorgesehen sein. Die beiden zuerst genannten Hallsensoren 12a, 12c können Teil eines Differential-Hallsensors sein. Die Messsignale der vertikalen Hallsensoren 12a, 12c können aber auch aufaddiert werden. Die Hall-Platte des horizontalen Hallsensors 1 3b ist etwa parallel zur Chipebene und zur Bewegungsrichtung 7 ausgerichtet.

Bei dem in Fig. 7A gezeigten Ausführungsbeispiel sind in den Halbleiterchip zwei vertikale Hallsensoren 12a, 12a' integriert, bei denen die Ebene der Hall-Platten quer zueinander angeordnet sind und bei denen sich die Hall-Platten mittig durchdringen. Dabei sind die Ebenen der Hall-Platten unter einem Winkel von +45° bzw. -45° zur Bewegungsrichtung 7 geneigt.

Bei dem in Fig. 7B gezeigten Ausführungsbeispiel sind zwei der Sensoranordnungen, jeweils bestehend aus zwei sich durchdringenden vertikalen Hallsensoren 12a, 12a' bzw. 12b, 12b' in Bewegungsrichtung 7 hintereinander in dem Halbleiterchip 6 angeordnet. Dabei verlaufen die Hall-Platten der Hallsensoren 12a, 12a' einerseits und die Hall-Platten der Hallsensoren 12b, 12b' andererseits, jeweils parallel.

In Fig. 7C ist erkennbar, dass zusätzlich zu den beiden in Fig. 7A vorgesehenen vertikalen Hallsensoren 12a, 12a' ein weiterer vertikaler Hallsensor 12a" vorhanden sein kann, dessen Hall-Platte quer zu den Hall-Platten der zuerst genanten Hallsensoren 12a, 12a' angeordnet ist. Alle drei Hallplatten 12a, 12a', 12b" haben eine gemeinsame Schnittlinie, die jeweils mittig zu den Hallplatten 12a, 1 2a', 12a" angeordnet ist.

Bei dem in Fig. 7D gezeigten Ausführungsbeispiel sind zwei der in Fig. 7C abgebildeten Sensoranordnungen in Bewegungsrichtung 7 versetzt zueinander in den Halbleiterchip 6 integriert.

Erwähnt werden soll noch, dass in den Halbleiterchip 6 auch mindestens zwei der in Fig. 6A-6M und 7A-7D gezeigten Hallsensor-Anordnungen nebeneinander integriert sein können. Eine derartige Messvorrichtung kann beispielsweise für eine lineare Wegmessung verwendet werden.

Selbstverständlich ist es auch möglich, dass in den Halbleiterchip mehr als drei vertikale Hallsensoren 12a, 12a', 12a", 12b, 12b', 12b", 12c, 13a, 13b, 13c und/oder mehr als drei horizontale Hallsensoren 13a, 13b, 13c integriert sind, beispielsweise um Komponenten des magnetischen Flusses für mehr als drei Achsen zu messen.

## Patentansprüche

1. Verfahren zum Erzeugen von Impulsflanken (11, 11'), die der Bewegung eines mechanischen Teiles synchron zugeordnet sind, wobei ein Magnetfeld erzeugt und mindestens zwei Messsignale (9, 10) für das Magnetfeld erfasst werden, wobei das Magnetfeld derart in Abhängigkeit von der Bewegung des mechanischen Teiles verändert wird, dass die Messsignale (9, 10) zueinander phasenverschoben moduliert werden,
**dadurch gekennzeichnet, dass**
das mechanische Teil in eine Anzahl vorbestimmter Referenzpositionen gebracht wird, an denen jeweils ein Messsignal (9, 10) mit einem Referenzwert verglichen werden soll, wobei an einer ersten Referenzposition ein Messwert für ein ersten Messsignal (9) aufgezeichnet und als erster Referenzwert gespeichert wird, wobei an einer zweiten Referenzposition ein Messwert für ein zweites Messsignal (10) aufgezeichnet aus als zweiter Referenzwert gespeichert wird, wobei danach das mechanische Teil bewegt, das erste Messsignal (9) mit dem ersten Referenzwert und das zweite Messsignal (10) mit dem zweiten Referenzwert verglichen wird,
und wobei eine Impulsflanke (11, 11') erzeugt wird, wenn mindestens einer dieser Vergleiche eine Übereinstimmung ergibt oder das Ergebnis des betreffenden Vergleichs sein Vorzeichen ändert und
der Betrag des ersten Messsignals (9) mit dem Betrag des zweiten Messsignals (10) verglichen wird.

2. Verfahren zum Erzeugen von Impulsflanken (11, 11'), die der Bewegung eines mechanischen Teiles synchron zugeordnet sind, wobei ein Magnetfeld erzeugt und mindestens zwei Messsignale (9, 10) für das Magnetfeld erfasst werden, wobei das Magnetfeld derart in Abhängigkeit von der Bewegung des mechanischen Teiles verändert wird, dass die Messsignale (9, 10) zueinander phasenverschoben moduliert werden,
**dadurch gekennzeichnet, dass**
das mechanische Teil in eine Anzahl vorbestimmter Referenzpositionen gebracht wird, an denen jeweils ein erstes Messsignal (9) mit einem zweiten Messsignal (10) verglichen werden soll, wobei an einer
jeder Referenzstelle jeweils ein Messwert für das erste Messsignal (9) und für das zweite Messsignal (10) erfasst wird, wobei die Differenz aus diesen Messwerten gebildet und als Korrekturwert abgelegt wird , wobei danach das mechanische Teil bewegt wird, wobei ein korrigiertes ersten Messsignal gebildet wird, indem der Korrekturwert zu dem ersten Messsignal (9) addiert oder von diesem subtrahiert wird, und wobei der Betrag des korrigierten ersten Messsignals mit dem Betrag des zweiten Messsignals (10) verglichen wird,
und wobei eine Impulsflanke (11, 11') erzeugt wird, wenn mindestens einer dieser Vergleiche eine Übereinstimmung ergibt oder das Ergebnis des betreffenden Vergleichs sein Vorzeichen ändert, und
der Betrag des ersten Messsignals (9) mit dem Betrag des zweiten Messsignals (10) verglichen wird,

3. Verfahren nach Anspruch 1 oder Anspruch 2, **dadurch gekennzeichnet, dass** ein zum ersten Messsignal (9) und zum zweiten Messsignal (10) phasenverschobenes drittes Messsignal erfasst wird,
- dass das dritte Messsignal mit einem dritten Referenzwert verglichen wird, und/oder
- dass der Betrag des ersten Messsignals (9) mit dem Betrag des dritten Messsignals verglichen wird, und/oder
- dass der Betrag des zweiten Messsignals (10) mit dem Betrag des dritten Messsignals verglichen wird
und dass eine Impulsflanke (11, 11') erzeugt wird, wenn mindestens einer dieser Vergleiche eine Übereinstimmung ergibt oder das Ergebnis des betreffenden Vergleichs sein Vorzeichen ändert.

4. Verfahren nach einem der Ansprüche 1 bis 3, **dadurch gekennzeichnet, dass**
- der erste Referenzwert vom Maximum und vom Minimum des ersten Messsignals (9) beabstandet ist und vorzugsweise dem Mittelwert zwischen dem Maximum und dem Minimum des ersten Messsignals (9) entspricht, und/oder
dass der zweite Referenzwert vom Maximum und vorn Minimum des zweiten Messsignals (10) beabstandet ist und vorzugsweise dem Mittelwert zwischen dem Maximum und dem Minimum des zweiten Messsignals (10) entspricht, und/oder dass der dritte Referenzwert vom Maximum und vom Minimum des dritten Messsignals beabstandet ist und vorzugsweise dem Mittelwert zwischen dem Maximum und dem Minimum des dritten Messsignals entspricht.

5. Verfahren nach einem der Ansprüche 1 bis 4, **dadurch gekennzeichnet, dass** die Messsignale (9, 10) quer und insbesondere rechtwinklig zueinander angeordneten Komponenten des Magnetfelds entsprechen.

6. Verfahren nach einem der Ansprüche 1 bis 5, **dadurch gekennzeichnet, dass** die Messsignale (9, 10) tiefpassgefiltert werden, bevor sie einem Referenzwert oder einem anderen Messsignal (10, 9) verglichen werden.

7. Halbleiterchip (6), in den ein Magnetfeldsensor und eine damit verbundene Signalverarbeitungseinrichtung integriert sind, wobei der Magnetfeldsensor zumindest ein erstes Sensorelement und ein zweites Sensorelement aufweist, die zueinander versetzt und/oder mit ihren Messachsen quer zueinander angeordnet sind,
die Signalverarbeitungseinrichtung eine Vergleichseinrichtung aufweist, die derart ausgestaltet ist, dass ein erstes Messsignal des ersten Sensorelements mit einem ersten Referenzwert und
dass ein zweites Messsignal (9) des zweiten Sensorelements mit einem zweiten Referenz wert vergleichbar ist und/oder
**dadurch gekennzeichnet dass**
der Betrag des ersten Messsignals (9) mit dem Betrag des zweiten Messsignals (10) vergleichbar ist,
und dass die Vergleichseinrichtung derart mit einem Impulsflankengenerator in Steuerverbindung steht, dass eine Impulsflanke (11, 11') erzeugt wird, wenn mindestens einer dieser Vergleiche eine Übereinstimmung ergibt oder das Ergebnis des betreffenden Vergleichs sein Vorzeichen ändert,
und dass mindestens eines der Sensorelemente ein vertikaler Hallsensor (12a, 12a', 12a", 12b, 12b', 12b", 12c, 12c', 12c") ist.

8. Halbleiterchip (6) nach Anspruch 78, **dadurch gekennzeichnet, dass** die Magnetfeldsensoren derart angeordnet sind, dass sie das Magnetfeld an derselben Stelle messen.

9. Halbleiterchip (6) nach Anspruch 7 oder 8, **dadurch gekennzeichnet, dass** mindestens eines der Sensorelemente ein horizontaler Hallsensor (13a, 13b, 13c) ist.

10. Halbleiterchip (6) nach einem der Ansprüche 8 bis 9, **dadurch gekennzeichnet, dass** die mit ihren Messachsen quer zueinander angeordneten Hallsensoren (12a, 12a', 12a", 12b, 12b', 12b", 12c, 12c', 12c", 13a, 13b, 13c) jeweils mindestens eine Hallplatte aufweisen, und dass sich die Hallplatten der Hallsensoren (12a, 12a', 12a", 12b, 12b', 12b", 12c, 12c', 12c", 13a, 13b, 13c) zumindest bereichsweise durchdringen.

11. Halbleiterchip (6) nach einem der Ansprüche 8 bis 10, **dadurch gekennzeichnet dass** vorzugsweise mittig zwischen zwei Hallsensoren (12a, 12a', 12a", 12b, 12b', 12b", 12c, 12c', 12c", 13a, 13b, 13c) mindestens ein weiterer mit der Vergleichseinrichtung verbundener Hallsensor (12a, 12a', 12a", 12b, 12b', 12b", 12c, 12c, 12c", 13a, 13b, 13c) in den Halbleiterchip (6) integriert ist.

## Claims

1. Method for generating pulse flanks (11, 11') synchronously associated with the movement of a mechanical part, wherein a magnetic field is generated and at least two measurement signals (9, 10) for the magnetic field are detected, and wherein the magnetic field is so varied in dependence on the movement of the mechanical part that the measurement signals (9, 10) are modulated in phase displacement relative to one another, **characterised in that** the mechanical part is brought into a number of predetermined reference positions at each of which a measurement signal (9, 10) is to be compared with a reference value, wherein at a first reference position a measurement value for a first measurement signal (9) is recorded and stored as a first reference value, wherein at a second reference position a measurement value for a second measurement signal (10) is recorded and stored as a second reference value, wherein thereafter the mechanical part is moved, the first measurement signal (9) is compared with the first reference value and the second measurement signal (10) is compared with the second reference value, and wherein a pulse flank (11, 11') is generated when at least one of these comparisons yields agreement or the result of the relevant comparison changes its sign and wherein the amount of the first measurement signal (9) is compared with the amount of the second measurement signal (10).

2. Method for generating pulse flanks (11, 11') synchronously associated with the movement of a mechanical part, wherein a magnetic field is generated and at least two measurement signals (9, 10) for the magnetic field are detected, and wherein the magnetic field is so varied in dependence on the movement of the mechanical part that the measurement signals (9, 10) are modulated in phase displacement relative to one another, **characterised in that** the mechanical part is brought into a number of predetermined reference positions at each of which a measurement signal (9, 10) is to be compared with a reference value, wherein at each reference point a respective measurement value for the first measurement signal (9) and for the second measurement signal (10) is detected, wherein the difference of these measurement values is formed and filed as a correction value, wherein thereafter the mechanical part is moved, wherein a corrected first measurement signal is formed **in that** the correction value is added to the first measurement signal (9) or subtracted therefrom, wherein the amount of the corrected first measurement signal is compared with the amount of the second measurement signal (10), and wherein a pulse flank (11, 11') is generated when at least one of these comparisons yields agreement or the result of the relevant comparison changes its sign and the amount of the first measurement signal (9) is compared with the amount of the second measurement signal (10).

3. Method according to claim 1 or claim 2, **characterised in that** a third measurement signal displaced in the phase with respect to the first measurement signal (9) and the second measurement signal (10) is detected,
- the third measurement signal is compared with a third reference value and/or
- the amount of the first measurement signal (9) is compared with the amount of the third measurement signal and/or
- the amount of the second measurement signal (10) is compared with the amount of the measurement signal
and a pulse flank (11, 11') is generated when at least one of these comparisons yields agreement or the result of the relevant comparison changes its sign.

4. Method according to any one of claims 1 to 3, **characterised in that**
- the first reference value is spaced from the maximum and from the minimum of the first measurement signal (9) and preferably corresponds with the mean value between the maximum and the minimum of the first measurement signal (9) and/or
- the second reference value is spaced from the maximum and from the minimum of the second measurement signal (10) and preferably corresponds with the mean value between the maximum and the minimum of the second measurement signal (10) and/or
- the third reference value is spaced from the maximum and from the the minimum of the third measurement signal and preferably corresponds with the mean value between the maximum and the minimum of the third measurement signal.

5. Method according to any one of claims 1 to 4, **characterised in that** the measurement signals (9, 10) correspond with components of the magnetic field arranged transversely and, in particular, at right angles to one another.

6. Method according to any one of claims 1 to 5, **characterised in that** the measurement signals (9, 10) are subjected to low-pass filtering before they are compared with a reference value or another measurement signal (10, 9).

7. Semiconductor chip (6) in which a magnetic field sensor and a signal processing device connected therewith are integrated, wherein the magnetic field sensor comprises at least one first sensor element and second sensor element, which are offset relative to one another and/or arranged with the measuring axes transverse to one another,
the signal processing device comprises a comparison device which is configured so that a first measurement signal of the first sensor element can be compared with the first reference value and a second measurement signal (9) of the second sensor element can be compared with a second reference value,
**characterised in that**
the amount of the first measurement signal (9) can be compared with the amount of the second measurement signal (10) and
the comparison device is so disposed in control connection with a pulse flank generator that a pulse flank (11, 11') is generated when at least one of these comparisons yields agreement or the result of the relevant comparison changes its sign and
at least one of the sensor elements is a vertical Hall sensor (12a, 12a', 12a", 12b, 12b', 12b", 12c, 12c', 12c").

8. Semiconductor chip (6) according to claim 7, **characterised in that** the magnetic field sensors are so arranged that they measure the magnetic field at the same point.

9. Semiconductor chip (6) according to claim 7 or 8, **characterised in that** at least one of the sensor elements is a horizontal Hall sensor (13a, 13b, 13c).

10. Semiconductor chip (6) according to one of claim 8 and 9, **characterised in that** the Hall sensors (12a, 12a', 12a", 12b, 12b', 12b", 12c, 12c', 12c", 13a, 13b, 13c), which are arranged with their measuring axes transverse to one another, each comprise at least one Hall plate and that the Hall plates of the Hall sensors (12a, 12a', 12a", 12b, 12b', 12b", 12c, 12c', 12c", 13a, 13b, 13c) mutually penetrate at least in a region.

11. Semiconductor chip (6) according to any one of claims 8 to 10, **characterised in that** at least one further Hall sensor (12a, 12a', 12a", 12b, 12b', 12b", 12c, 12c', 12c", 13a, 13b, 13c) connected with the comparison device is integrated in the semiconductor chip (6) preferably centrally between two Hall sensors (12a, 12a', 12a", 12b, 12b', 12b", 12c, 12c', 12c", 13a, 13b, 13c).

## Revendications

1. Procédé de production de flancs d'impulsion (11, 11'), qui sont associés de manière synchrone au mouvement d'une pièce mécanique, dans lequel on produit un champ magnétique et on détecte au moins deux signaux de mesure (9, 10) pour le champ magnétique, dans lequel on fait varier le champ magnétique en fonction du mouvement de la pièce mécanique, de telle manière que les signaux de mesure (9, 10) soient modulés en décalage de phase l'un par rapport à l'autre, **caractérisé en ce que** l'on place la pièce mécanique dans un certain nombre de positions de référence prédéterminées, dans lesquelles on doit chaque fois comparer un signal de mesure (9, 10) avec un signal de référence, dans lequel on enregistre une valeur de mesure pour un premier signal de mesure (9) à une première position de référence et on le mémorise comme première valeur de référence, dans lequel on enregistre une valeur de mesure pour un deuxième signal de mesure (10) à une deuxième position de référence et on le mémorise comme deuxième valeur de référence, dans lequel on déplace ensuite la pièce mécanique, on compare le premier signal de mesure (9) avec la première valeur de référence et le deuxième signal de mesure (10) avec la deuxième valeur de référence, et dans lequel on produit un flanc d'impulsion (11, 11'), lorsqu'au moins une de ces comparaisons livre une concordance ou que le résultat de la comparaison concernée change de signe, et on compare le montant du premier signal de mesure (9) au montant du deuxième signal de mesure (10).

2. Procédé de production de flancs d'impulsion (11, 11'), qui sont associés de manière synchrone au mouvement d'une pièce mécanique, dans lequel on produit un champ magnétique et on détecte au moins deux signaux de mesure (9, 10) pour le champ magnétique, dans lequel on fait varier le champ magnétique en fonction du mouvement de la pièce mécanique, de telle manière que les signaux de mesure (9, 10) soient modulés en décalage de phase l'un par rapport à l'autre, **caractérisé en ce que** l'on place la pièce mécanique dans un certain nombre de positions de référence prédéterminées, auxquelles on doit chaque fois comparer un premier signal de mesure (9) à un deuxième signal de mesure (10), dans lequel on détecte à chacune des positions de référence chaque fois une valeur de mesure pour le premier signal de mesure (9) et pour le deuxième signal de mesure (10), dans lequel on forme la différence entre ces valeurs de mesure et on l'enregistre comme valeur de correction, dans lequel on déplace ensuite la pièce mécanique, dans lequel on forme un premier signal de mesure corrigé, du fait que l'on ajoute la valeur de correction au premier signal de mesure (9) ou qu'on l'en soustrait, et dans lequel on compare le montant du premier signal de mesure corrigé au montant du deuxième signal de mesure (10), et dans lequel on produit des flancs d'impulsion (11, 11'), lorsqu'au moins une de ces comparaisons livre une concordance ou que le résultat de la comparaison concernée change de signe, et on compare le montant du premier signal de mesure (9) au montant du deuxième signal de mesure (10).

3. Procédé selon la revendication 1 ou la revendication 2, **caractérisé en ce que** l'on détecte un troisième signal de mesure déphasé par rapport au premier signal de mesure (9) et au deuxième signal de mesure (10), **en ce que** l'on compare le troisième signal de mesure à une troisième valeur de référence, et/ou **en ce que** l'on compare le montant du premier signal de mesure (9) au montant du troisième signal de mesure, et/ou **en ce que** l'on compare le montant du deuxième signal de mesure (10) au montant du troisième signal de mesure, et **en ce que** l'on produit des flancs d'impulsion (11, 11'), lorsqu'au moins une de ces comparaisons livre une concordance ou que le résultat de la comparaison concernée change de signe.

4. Procédé selon l'une quelconque des revendications 1 à 3, **caractérisé en ce que** la première valeur de référence est éloignée du maximum et du minimum du premier signal de mesure (9) et correspond de préférence à la valeur moyenne entre le maximum et le minimum du premier signal de mesure (9), et/ou **en ce que** la deuxième valeur de référence est éloignée du maximum et du minimum du deuxième signal de mesure (10) et correspond de préférence à la valeur moyenne entre le maximum et le minimum du deuxième signal de mesure (10), et/ou **en ce que** la troisième valeur de référence est éloignée du maximum et du minimum du troisième signal de mesure et correspond de préférence à la valeur moyenne entre le maximum et le minimum du troisième signal de mesure.

5. Procédé selon l'une quelconque des revendications 1 à 4, **caractérisé en ce que** les signaux de mesure (9, 10) correspondent à des composantes du champ magnétique disposées transversalement et en particulier perpendiculairement l'une à l'autre.

6. Procédé selon l'une quelconque des revendications 1 à 5, **caractérisé en ce que** l'on filtre au filtre passe-bas les signaux de mesure (9, 10) avant de les comparer à une valeur de référence ou à un autre signal de mesure (10, 9).

7. Puce à semi-conducteur (6), dans laquelle sont intégrés un détecteur de champ magnétique et un dispositif de traitement de signaux relié à celui-ci, dans laquelle le détecteur de champ magnétique présente au moins un premier élément de détecteur et un deuxième élément de détecteur, qui sont décalés l'un par rapport à l'autre et/ou qui sont disposés avec leurs axes de mesure transversalement l'un à l'autre, le dispositif de traitement de signaux présente un dispositif de comparaison, qui est configuré de telle manière qu'un premier signal de mesure du premier élément de détecteur puisse être comparé à une première valeur de référence et qu'un deuxième signal de mesure (9) du deuxième élément de détecteur puisse être comparé à une deuxième valeur de référence, et/ou **caractérisée en ce que** le montant du premier signal de mesure (9) peut être comparé au montant du deuxième signal de mesure (10), et **en ce que** le dispositif de comparaison est en liaison de commande avec un générateur de flancs d'impulsion, de telle manière qu'un flanc d'impulsion (11, 11') soit produit lorsqu'au moins une de ces comparaisons livre une concordance ou que le résultat de la comparaison concernée change de signe, et **en ce qu'**au moins un des éléments de détecteur est un capteur de Hall vertical (12a, 12a', 12a", 12b, 12b', 12b", 12c, 12c', 12c").

8. Puce à semi-conducteur (6) selon la revendication 7, **caractérisée en ce que** les détecteurs de champ magnétique sont disposés de telle manière qu'ils mesurent le champ magnétique au même endroit.

9. Puce à semi-conducteur (6) selon la revendication 7 ou 8, **caractérisée en ce qu'**au moins un des éléments de détecteur est un capteur de Hall horizontal (13a, 13b, 13c).

10. Puce à semi-conducteur (6) selon une des revendications 8 à 9, **caractérisée en ce que** les capteurs de Hall disposés avec leurs axes de mesure transversalement l'un par rapport à l'autre (12a, 12a', 12a", 12b, 12b', 12b", 12c, 12c', 12c", 13a, 13b, 13c) présentent chacun au moins une plaque de Hall, et **en ce que** les plaques de Hall des capteurs de Hall (12a, 12a', 12a", 12b, 12b', 12b", 12c, 12c', 12c", 13a, 13b, 13c) se traversent au moins localement.

11. Puce à semi-conducteur (6) selon l'une quelconque des revendications 8 à 10, **caractérisée en ce qu'**au moins un autre capteur de Hall (12a, 12a', 12a", 12b, 12b', 12b", 12c, 12c', 12c", 13a, 13b, 13c) relié au dispositif de comparaison est intégré dans la puce à semi-conducteur (6) à mi-distance entre deux capteurs de Hall (12a, 12a', 12a", 12b, 12b', 12b", 12c, 12c', 12c", 13a, 13b, 13c).
